# EUROPEAN PATENT APPLICATION

(11) **EP 1 512 929 A2**
(43) Date of publication of application: **09.03.2005**
(21) Application number: 04077293.1
(22) Date of filing: 12.08.2004
(51) Int. Cl.: F27D 7/04, F27B 9/30, C03B 25/08, C03B 29/08

(54) **An oven particularly for treatment of glass articles and a method of heating glass articles**

(30) Priority: 05.09.2003 GB 0320837
(71) Applicant: Gemco-SAS B.V., 5692 EB Son (NL)
(72) Inventor: Kaper, Gerard, 5581 SJ Waalre (NL)
(74) Representative: Valkonet, Rutger

(57) **Abstract**

The invention provides a heat treatment apparatus (10) comprising means of re-circulating a heated fluid wherein the flow direction of the heated fluid is cyclically changed during heat treatment comprising: a heating chamber (16) with at least first and second regions; a pump (22) with an inlet chamber and an outlet duct wherein both the duct and inlet chamber are in fluid communication with the heating chamber; a fluid heater located either upstream or downstream of the pump; and first diverter means (30) that allows heating fluid either leaving the pump through the outlet duct (26) or entering the pump through the inlet chamber (28) to be directed to or from, respectively, a selected region of the heating chamber. The invention further provides a method of heat treating a Plasma Display Panel or glass products using a heat treatment apparatus comprising means of re-circulating a heated fluid through a heating chamber wherein: the flow direction of the heated fluid is cyclically changed during heat treatment.

## Description

This invention relates to a heat treatment apparatus and in particular to an oven for the treatment of flat glass articles and such as a tunnel type ovens for continuous treatment of Plasma Display Panels (PDPs) or glass products in general. The invention also relates to a method of heat treating of glass products, particularly PDPs.

Ovens for heat treating glass articles are known. One such known oven comprises a chamber in which glass articles to be treated are located and an air circulation system which is arranged to blow air against the glass article. In one particular form of oven, a number of baffles are provided to direct air against selected parts of the article being treated. In such known ovens, an air outlet is located, often at the base of the chamber to extract all of the air blown into the chamber. Known ovens suffer from problems of uneven temperature distribution. During heating and cooling of Plasma Display Panels it is important that the temperature uniformity of the product is as even as possible.

It is an object of the invention to provide an improved oven; and in particular a tunnel oven for mass production of PDPs.

According to one aspect of the invention there is provided a heat treatment apparatus comprising means of re-circulating a heated fluid wherein the flow direction of the heated fluid is cyclically changed during heat treatment comprising: a heating chamber with at least first and second regions; a pump with an inlet chamber and an outlet duct wherein both the duct and inlet chamber are in fluid communication with the heating chamber; a fluid heater located either upstream or downstream of the pump; and first diverter means that allows heating fluid either leaving the pump through the outlet duct or entering the pump through the inlet chamber to be directed to or from, respectively, a selected region of the heating chamber.

According to another aspect of the invention there is provided a method of heat treating a Plasma Display Panel or glass products using a heat treatment apparatus comprising means of recirculating a heated fluid through a heating chamber wherein: the flow direction of the heated fluid is cyclically changed during heat treatment.

The oven for heat treatment of glass articles; for example, PDPs preferably includes a tunnel structure through which PDPs are transported. This transportation can be continuously or intermittent (start-stop). The tunnel oven preferably comprises several oven sections each with its own heating and/or cooling system, regulated by a temperature control system. The PDPs may be heated and cooled by process air, which is circulated through each oven section by a motor driven fan impeller. The process air flows past the articles undergoing heat treatment; preferably in a direction generally parallel to the main surface to be heated. The invention contains the principle to change the direction of the circulation air inside the product room, with a time interval, in order to achieve a higher temperature uniformity of the PDP.

The PDPs are preferably supported in the oven on a carrier. The position of the PDPs in combination with the air flow system can be arranged in several ways.
- Horizontally above each other (several layers). The process airflow from the right side air channel to the left side channel, and reversed.
- Vertically perpendicular to the transport direction. The process airflow from the right side air channel to the left side channel, and reversed.
- Vertically perpendicular to the transport direction. The process airflow from the topside air channel to the bottom side channel, and reversed.
- Tilted under an angle. The process airflow from the right side air channel to the left side channel, and reversed.

During the heating cycle, the process air temperature is higher than the temperature of the PDPs. Due to this temperature difference, the process air transfers thermal convective energy to the PDPs. Date to this energy transfer, the PDP will increase in temperature, while the process air will decrease in temperature. In the product room the upstream process air has a higher temperature than downstream process air. This phenomenon will also result in a temperature difference over a particular PDP. The edge of the PDP that is near the supply side of the process air has a higher temperature than the edge that is near the exhaust side of the process air. The invention contains the principle that the airflow direction the product room is reversed with a certain interval, which uniforms the temperature of the PDP during the heating and cooling cycle.

Typical processes where the invention contributes to an effective and uniform heating and cooling are;
- Frit sealing of the front plate and back plate of PDPs;
- Exhausting and gas filling of PDPs;
- Combination of frit sealing, exhausting and gas filling of PDPs;
- Heating and cooling of flat glass panels in general;

The apparatus of the invention and the method of the invention contributes to a higher yield and/or a shorter process time for the heat treatment process.

The reversal of the air direction can be achieved by several systems. An embodiment of the invention is now more particularly described with reverence to the accompanying schematic drawings in which:
Figure 1 is a lateral cross section of a heating zone of a tunnel oven for heat treatment of PDPs (circulation air from left to right);
Figure 2 is a lateral cross section of a heating zone of a tunnel oven for heat treatment of PDPs (circulation air from right to left);
Figure 3 is cross section A-A of the section as presented in figure 1;
Figure 4 is cross section C-C of the section as presented in figure 2;
Figure 5 is cross section B-B of the section as presented in figure 1; and
Figure 6 is cross section D-D of the section as presented in figure 2.

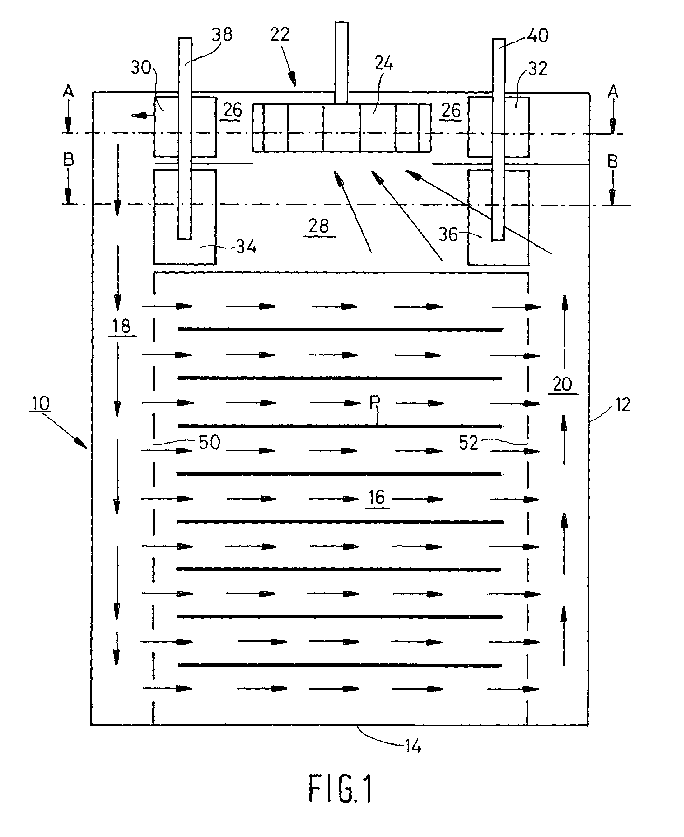

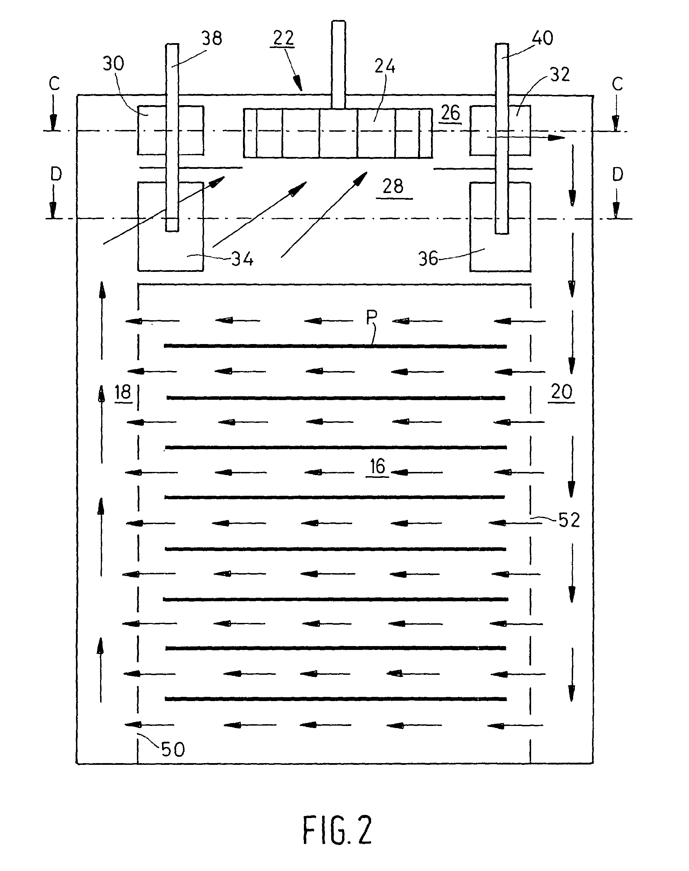

International Application Number WO 03/106358 describes an A1 oven for the treatment of glass articles comprising several oven modules arranged in series and a vacuum cart for supporting individual PDPs as they travel on the cart through the oven. This basic arrangement is suitable for the present invention. However, the flow of heating fluid within the apparatus differs for the present invention; thus, figures 1 and 2 show that the direction of flow of the heating fluid relative to articles to be heated can be either left to right (figure 1) or right to left (figure 2). Figures 1 to 6 show schematically how the flow direction can be reversed in a cyclic manner.

Figure 1 shows a lateral cross section of an oven 10 according to one embodiment of the invention. The oven 10 comprises an outer shell 12 which may have a continuous floor section 14 (as shown) or may have a central longitudinal aperture to accommodate the support arm of a vacuum cart or the like. Oven 10 further comprises a heating chamber 16; first flow channel 18; second flow channel 20 and a fan assembly 22. Fan assembly 22 comprises an electrically driven fan 24 with an outlet chamber or duct 26 and an inlet chamber 28 and the fan creates the pressure difference required to circulate the heating fluid within the apparatus. Outlet chamber 26 has a first flow diverter 30 and a second flow diverter 32 which may be actuated to divert flow from the outlet of the fan 22 to either the first flow channel 18 or the second flow channel 20 respectively. Similarly inlet chamber 28 has a third flow diverter 34 and a forth flow diverter 36 which may be actuated to draw circulating fluid into the fan from either the first flow channel 18 or the second flow channel 20 respectively. The flow diverters may be actuated by pivotal motion about a shaft. Further the first and third flow diverter may share a common shaft 38 and the second and forth flow diverters may share another common shaft 40.

Thus, when shafts 38 and 40 are in a first position heating fluid flows over the PDPs from left to right (see figure 1), passes up the second flow channel 20 through (open) diverter 36 and into fan 24 via inlet chamber 28 and thence out of fan 24 through (open) diverter 30 via outlet duct or chamber 26 and down first flow channel 18. When shafts 38 and 40 are in this first position diverters 32 and 34 are in a closed position.

When shafts 38 and 40 are in a second position heating fluid flows over PDPs from right to left (see figure 2), passes up the first flow channel 18 through (open) diverter 34 and into fan 24 via inlet chamber 28 and thence out of fan 24 through (open) diverter 32 via outlet duct or chamber 26 and down second flow channel 20. When shafts 38 and 40 are in this second position diverters 30 and 36 are in a closed position.

Thus by actuating shafts 38 and 40 the flow direction of heating fluid over the PDPs may be reversed. The circulating fluid may be heated directly or indirectly at some point in its recirculating flow path. Such heating preferably takes place in inlet chamber 28; but may also take place elsewhere such as downstream of the fan outlet. The latter may be preferable where the fluid is being heated to temperatures near or above the maximum that can be withstood by the fan.

The first and second flow channels 18 and 20 preferably have a plurality of elongate apertures 50 and 52 respectively that serve to direct flow of recirculating heating fluid in a direction parallel to the flat faces P of the PDPs.

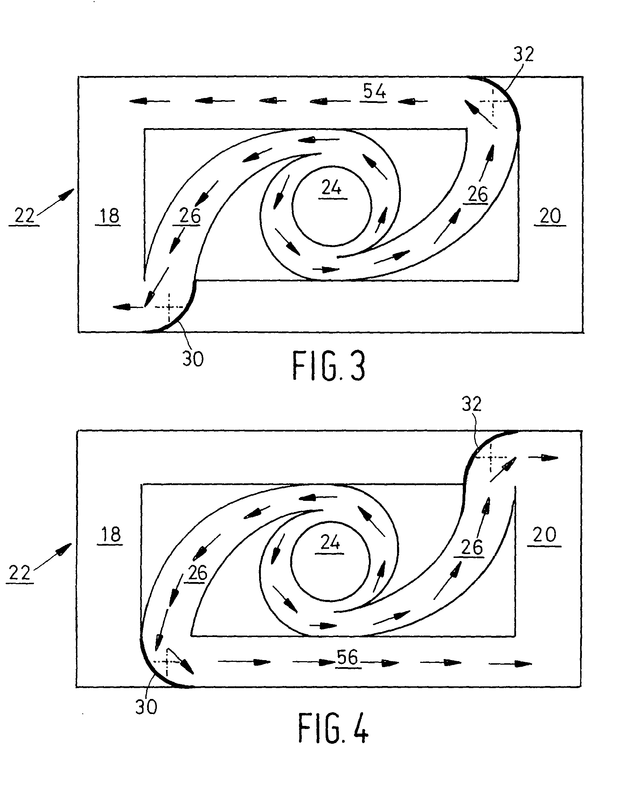

Figures 3 to 6 show one arrangement of ducting and flow diverters that may be used to achieve the above described reversal of flow direction.

Figures 3 and 4 are cross sections of fan assembly 22 A-A and C-C as presented in figures 1 and 2 respectively. Figure 3 shows fan 24 positioned centrally within the fan assembly 22. Two outlet ports 26 direct fluid exiting fan 24 to flow diverters 30 and 32 and thence (in the position shown in figure 3) into and down first flow channel 18. When flow diverters 30 and 32 are actuated so that they pivot through an angle of 90° (see figure 2) then, heating fluid exiting fan 24 via ducts 26 is directed to the top of the second flow channel 20 and hence down that channel.

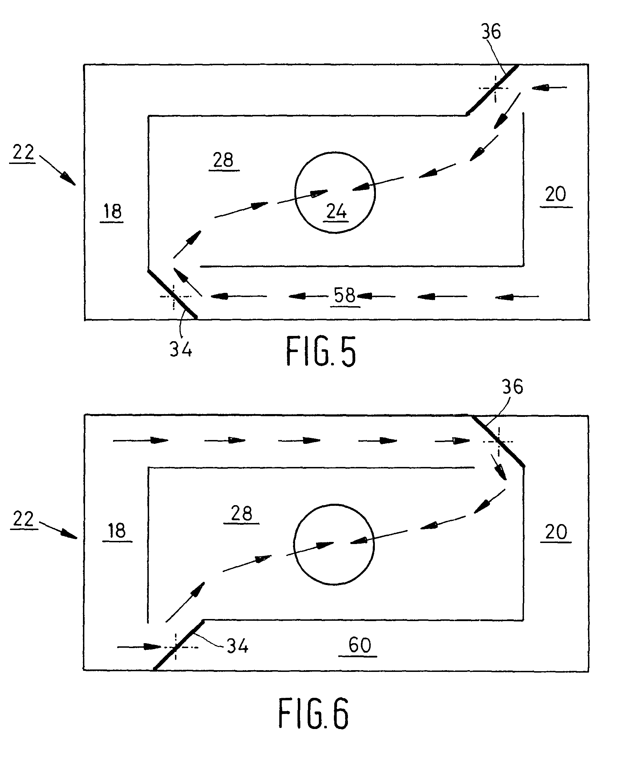

Figures 5 and 6 show a cross section through fan assembly 22 of the sections B-B and D-D of Figures 1 and 2 respectively. When flow diverters 34 and 36 are in a position shown in figure 5 heating fluid may exit from the top of second flow channel 20 and enter inner chamber 28 either directly or via intermediate channel 58. When the diverters are actuated by rotating them through an angle of 90° (see figure 6) heating fluid leaving the top of first flow channel 18 enters inlet chamber 28 either directly or via intermediate channel 60.

Thus in use the diverter valves are either in the position shown in figures 3 and 5 or the positions shown in figures 4 and 6.

Diverter valves 30, 32, 34, 36 can take a variety of forms. Thus, they may be pivoting gates as shown in figures 5 and 6, or curved members as shown in figures 3 and 4. Alternatively, the pivoting diverter assemblies may be replaced by some other form of equivalent valve mechanism; for example a two way valve actuated by movement of a member in an axial direction. Shafts 38 and 40 may be automatically actuated at pre-set time intervals; for example by use of a pneumatic actuator.

While figures 3 to 6 show an arrangement where two fan outlet ducts are employed other arrangements are possible; for example there may be just a single duct or more than two ducts. Likewise, the provision of two flow paths from either the first flow channel or second flow channel into the inlet chamber 28 can be replaced by an arrangement by either a single flow channel or more than two flow channels.

While the invention is particularly suited to heat treatment of glass articles it is not limited for use only with this type of oven. It may be used for any oven furnace or the like where it is desirable to achieve uniform heating of an article. While the apparatus will often operate at near ambient pressure this is not essential and by use of a suitably enclosed oven the apparatus and the method of using the apparatus could be applied at pressures either above or below atmospheric pressure.

The effectiveness of the apparatus and method depends upon reversing the flow direction of heating fluid after an appropriate period. For the heat treatment of PDP's it has been found that the flow direction should be changed to appear not exceeding 10 - 300 seconds and preferably a period not exceeding 40 - 80 seconds. For heat treatment of PDP's the temperature of the oven is preferably within the range 20 - 600 °C, and more preferably 30 - 500 °C.

## Claims

1. A heat treatment apparatus comprising means of recirculating a heated fluid wherein the flow direction of the heated fluid is cyclically changed during heat treatment comprising: a heating chamber with at least first and second regions; a pump with an inlet chamber and an outlet duct wherein both the duct and inlet chamber are in fluid communication with the heating chamber; a fluid heater located either upstream or downstream of the pump; and first diverter means that allows heating fluid either leaving the pump through the outlet duct or entering the pump through the inlet chamber to be directed to or from, respectively, a selected region of the heating chamber.

2. Apparatus according to claim 1 comprising a second diverter means working in co-operation with the first diverter means so that in use heating fluid may be directed to flow from either the first region to the second region via the pump or from the second region to the first region via the pump.

3. Apparatus according to any preceding claim comprsing a pump with more than one outlet duct such that the first diverter means allow fluid to be directed through both outlet ducts at once to a selected region of the heating chamber.

4. Apparatus according to any preceding claim wherein diverter means are located near or at the point of entry of the fluid to the inlet chamber or of exit of fluid from the outlet duct.

5. Apparatus according to any preceding claim wherein the diverter means comprise a flat or curved gate.

6. Apparatus according to claim 5 wherein the gate is pivotably mounted such that pivoting from a first position to a second position diverts flow from a first region to a second region of the heating chamber.

7. Apparatus according to any of claims 1 to 4 wherein the flow diverter comprises a two-way valve.

8. Apparatus according to any preceding claim comprising an oven for the heat treatment of Plasma Display Panels.

9. A method of heat treating a Plasma Display Panel or glass products using a heat treatment apparatus comprising means of recirculating a heated fluid through a heating chamber wherein: the flow direction of the heated fluid is cyclically changed during heat treatment.

10. A method according to claim 9 wherein the fluid is air.

11. A method according to claim 10 wherein the air is circulated by a fan.

12. A method according to claim 11 wherein the air is heated before or after entering the fan.

13. A method according to any of claims 10 to 13 wherein the flow direction is changed using flow diverters or valves located in the flow path of the recirculating fluid.

14. A method according to claim 13 wherein the flow diverters or valves are located in an exit duct(s) of a fan used to circulate the fluid.

15. A method according to claim 13 wherein the flow diverters or valves are located at or near to a fluid entry chamber of a fan used to circulate the fluid.
